# EUROPÄISCHE PATENTANMELDUNG

(11) **EP 4 610 527 A1**
(43) Veröffentlichungstag der Anmeldung: **03.09.2025**
(21) Anmeldenummer: 25153129.9
(22) Anmeldetag: 21.01.2025
(51) Int. Cl.: F16K 1/12, F16K 27/02, F16K 31/52

(54) **RINGKOLBENVENTIL**

(30) Priorität: 28.02.2024 DE 102024105569
(71) Anmelder: VAG GmbH, 68305 Mannheim (DE)
(72) Erfinder: Herold, Heribert Erich, 68259 Mannheim (DE); Corrado, Francesco Giuseppe, 67157 Wachenheim (DE)
(74) Vertreter: Charrier Rapp & Liebau

(57) **Zusammenfassung**

Die Erfindung betrifft ein Ringkolbenventil mit einem Gehäuse (1), einem zwischen einem Außenteil (3) und einem inneren Führungsteil (5) des Gehäuses (1) gebildeten Ringkanal (8) zur Führung eines Mediums zwischen einer Einlassöffnung (9) und einer Auslassöffnung (10) des Gehäuses (1), einem innerhalb des inneren Führungsteils (5) des Gehäuses (1) axial verschiebbar geführten Abschlusskolben (15) und eine mittels einer Antriebswelle (7) von der Außenseite des Gehäuses (1) betätigbare Stelleinrichtung, über die der Abschlusskolben (15) durch Drehung der Antriebswelle (7) zwischen einer Öffnungsstellung und einer Schließstellung axial bewegbar ist. Erfindungsgemäß ist der Abschlusskolben (15) über ein hülsenförmiges Führungselement (17) auf einer zentralen Führungsachse (13) verschiebbar geführt und die Stelleinrichtung enthält ein mit der Antriebswelle (7) verdrehgesichert verbundenes Stellelement, das über eine Nut-Zapfen-Verbindung (36, 37) mit dem hülsenförmigen Führungselement (17) verbunden ist.

## Beschreibung

Die Erfindung betrifft ein Ringkolbenventil nach dem Oberbegriff des Anspruchs 1.

Ein derartiges Ringkolbenventil ist aus der DE 20 2012 003 033 U1 bekannt. Dieses Ringkolbenventil enthält ein Gehäuse mit einem zwischen einem Außenteil und einem inneren Führungsteil des Gehäuses gebildeten Ringkanal, durch den Wasser oder ein anderes Medium zwischen einer Einlassöffnung und einer Auslassöffnung des Gehäuses strömen kann. In dem inneren Führungsteil des Gehäuses ist ein den Durchlass durch den Ringkanal steuernder Abschlusskolben axial verschiebbar geführt. Die Führung des Abschlusskolbens erfolgt über an der Außenseite des Abschlusskolbens anliegende Kolbenführungsleisten, die an der Innenseite des inneren Führungsteils entweder angeschweißt oder angeschraubt sind. Durch eine mittels einer Antriebswelle von der Außenseite des Gehäuses betätigbare Stelleinrichtung ist der Abschlusskolben zwischen einer Schließstellung und einer Öffnungsstellung axial verschiebbar. Die Stelleinrichtung zur axialen Verstellung des Abschlusskolbens ist bei diesem bekannten Ringkolbenventil als Kurbelantrieb mit einer auf Antriebswelle befestigten Antriebskurbel und einer mit der Antriebskurbel und dem Abschlusskolben gelenkig verbundenen Pleuelstange ausgeführt.

Aufgabe der Erfindung ist es, ein Ringkolbenventil der eingangs genannten Art zu schaffen, das einen vereinfachten Betätigungsmechanismus mit einer alternativen Führung des Kolbens aufweist.

Diese Aufgabe wird durch ein Ringkolbenventil mit den Merkmalen des Anspruchs 1 gelöst. Zweckmäßige Ausgestaltungen und vorteilhafte Weiterbildungen der Erfindung sind in den Unteransprüchen angegeben.

Bei dem erfindungsgemäßen Ringkolbenventil ist der Abschlusskolben über ein hülsenförmiges Führungselement auf einer zentralen Führungsachse verschiebbar geführt und die Stelleinrichtung enthält ein mit einer Antriebswelle verdrehgesichert verbundenes Stellelement, das über eine Nut-Zapfen-Verbindung mit dem hülsenförmigen Führungselement verbunden ist. Durch diese konstruktive Gestaltung ist eine besonders kompakte Bauweise des Ringkolbenventils mit einem vereinfachten Betätigungsmechanismus erreichbar.

Die Nut-Zapfen-Verbindung kann zweckmäßigerweise durch mindestens eine einseitig offene Längsnut oder ein Langloch in dem Stellelement und einen in die Längsnut oder das Langloch eingreifenden Verbindungszapfen an dem hülsenförmigen Führungselement gebildet sein.

In einer besonders stabilen Ausführung enthält das Stellelement einen U-förmigen Querschnitt mit zwei Seitenwangen, zwischen denen ein mit seitlichen Abflachungen versehener Führungsbereich des hülsenförmigen Führungsteils angeordnet ist. In den beiden Seitenwangen des Stellelements kann jeweils eine Längsnut oder ein Langloch zur Aufnahme jeweils eines Verbindungszapfens an gegenüberliegenden Seiten des hülsenförmigen Führungselements vorgesehen sein. Dadurch ist eine besonders genaue und gegen Verdrehung gesicherte Führung des Abschlusskolbens innerhalb des Führungsteils erreichbar. Das Stellelement kann aber auch eine mit nur einem Langloch oder einer Längsnut versehene einfache Lasche sein, die nur an einer Seite des Führungselements angeordnet und nur über einem Führungszapfen mit dem Führungsteil verbunden ist.

Die Längsnut oder das Langloch kann einen geraden oder gebogenen Verlauf aufweisen. Durch die Kontur und den Verlauf der Längsnut bzw. des Langlochs kann die Verstellcharakteristik verändert werden.

Die Mittelachse der Antriebswelle ist zweckmäßigerweise gegenüber der Mittelachse der zentralen Führungsachse versetzt. Die zentrale Führungsachse kann an einem deckelförmigen Verschlussteil des inneren Führungsteils des Gehäuses angeordnet sein. Die zentrale Führungsachse kann aber auch über einen Flansch oder auf andere Weise innerhalb des Gehäuses befestigt sein.

Das hülsenförmige Führungselement ist vorzugsweise über ein vorderes und hinteres Gleitlager auf der zentralen Führungsachse verschiebbar geführt. Dadurch kann eine kippsichere und lange Führung des Abschlusskolbens erreicht werden.

Zwischen einer Abschlussbuchse des Abschlusskolbens und dem inneren Führungsteil des Gehäuses kann an einer zur Auslassöffnung gewandten Öffnung des Führungsteils ein Sammelraum zur Aufnahme von Ablagerungen angeordnet sein. Dadurch kann die Einsatzzeit des Ringkolbenventils verlängert werden.

Das kurbelförmige Stellelement kann über eine Passfedernut oder ein Mehrkantprofil verdrehgesichert mit der Antriebswelle verbunden sein.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein Ringkolbenventil in einem Querschnitt;
- **Figur 2**: das Ringkolbenventil von Figur 1 in einem Längsschnitt entlang der Linie A-A von Figur 1;
- **Figur 3**: das Ringkolbenventil von Figur 1 in einem Längsschnitt entlang der Linie B-B von Figur 1;
- **Figur 4**: ein zweites Ausführungsbeispiel eines Ringkolbenventils in einem Längsschnitt entlang der Linie B-B von Figur 1 und
- **Figur 5**: einen Abschlusskolben mit einer Abschlussbuchse, einem hülsenförmigen Führungsteil und einem Stellelement in einer Perspektive.

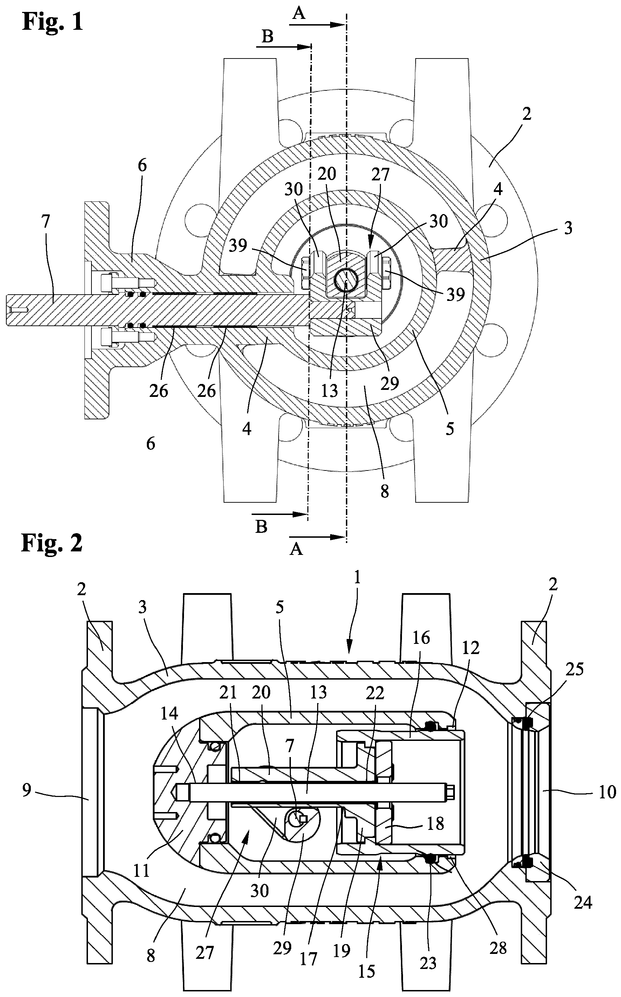

In den Figuren 1 bis 3 ist ein erstes Ausführungsbeispiel eines z.B. zur Regelung von Durchflüssen und zum Abbauen von Drücken hauptsächlich in Wassergewinnungsanlagen verwendeten Ringkolbenventils in verschiedenen Ansichten dargestellt. Das in Figur 1 in einem Querschnitt gezeigte Ringkolbenventil enthält ein vorzugsweise aus duktilem Gusseisen bestehendes Gehäuse 1, das einen mit Anschlussflanschen 2 versehenen Außenteil 3 und einen über Halterippen 4 an der Innenseite des Außenteils 3 abgestützten inneren Führungsteil 5 aufweist. Das Gehäuse 1 enthält außerdem einen seitlich vorstehenden Antriebsflansch 6, in dem eine Antriebswelle 7 eines im Folgenden noch näher erläuterten Betätigungsmechanismus drehbar gelagert ist.

Wie aus Figur 2 hervorgeht, wird zwischen dem Außenteil 3 und dem inneren Führungssteil 5 des Gehäuses 1 ein Ringkanal 8 begrenzt, durch welchen vorzugsweise Wasser oder ein anderes Medium von einer Einlassöffnung 9 zu einer Auslassöffnung 10 des Gehäuses 1 strömen kann. Das zur Auslassöffnung 10 hin offene innere Führungsteil 5 des Gehäuses 1 ist an der zur Einlassöffnung 9 weisenden Seite durch ein deckelförmiges Verschlussteil 11 geschlossen. In dem am Führungsteil 5 lösbar befestigten deckelförmigen Verschlussteil 11 ist eine bis zur Öffnung 12 an dem inneren Führungsteil 5 reichende zentrale Führungsachse 13 befestigt. Diese Führungsachse 13 ist über ein Gewinde 14 in das deckelförmige Verschlussteil 11 eingeschraubt.

In Figur 2 ist auch erkennbar, dass in dem zur Auslassöffnung 7 hin offenen inneren Führungsteil 5 des Gehäuses 1 ein Abschlusskolben 15 axial verschiebbar geführt ist. Durch die axiale Verschiebung des Abschlusskolbens 15 kann der Durchlass durch den Ringkanal 8 gesteuert werden. Der Abschlusskolben 15 enthält in der gezeigten Ausführung eine Abschlussbuchse 16, die zwischen einem hülsenförmigen Führungselement 17 und einem scheibenförmigen Halteelement 18 eingespannt ist. Das hülsenförmige Führungselement 17 weist in der gezeigten Ausführung einen dem scheibenförmigen Haltelement 18 zugewandten erweiterten Haltebereich 19 und einen schlankeren Führungsbereich 20 auf. Zwischen dem erweiterten Haltebereich 19 und dem scheibenförmigen Halteelement 18 ist die Abschlussbuchse 16 eingespannt. Durch das hülsenförmige Führungselement 17 ist der Abschlusskolben 15 über hier als Gleitlager ausgebildete vordere und hintere Lager 21 und 22 auf der in Axialrichtung unbeweglichen zentralen Führungsachse 13 axial verschiebbar über eine hier als Vierlippendichtung (Quadring) ausgebildete Dichtung 23 gegenüber dem Führungsteil 5 radial abgedichtet geführt.

An der Auslassöffnung 8 des Gehäuses 1 ist ein Haltering 24 mit einer als Profildichtung ausgebildeten Abschlussdichtung 25 befestigt. Die durch den Haltering 24 fixierte Abschlussdichtung 25 liegt im Strömungsschatten und ist damit gut gegen Abrasion durch das Strömungsmedium geschützt. Durch Demontage des Halterings 24 kann die Abschlussdichtung 25 bei Bedarf aber einfach gewechselt werden.

Aus Figur 1 ist ersichtlich, dass die Antriebswelle 7 über Lagerbuchsen 26 in dem seitlich vorstehenden Antriebsflansch 6 des Gehäuses 1 drehbar gelagert ist. Die Mittelachse der Antriebswelle 7 ist gegenüber der Mittelachse der Führungsachse 13 versetzt. Über eine Stelleinrichtung 27 ist die Antriebswelle 7 derart mit dem hülsenförmigen Führungselement 17 des Abschlusskolbens 15 gekoppelt, dass der Abschlusskolben 15 durch Drehung der Antriebswelle 7 zwischen einer in Figur 2 gezeigten Offenstellung und einer zur Anlage an der Abschlussdichtung 25 gelangenden Schließstellung verschoben werden kann. Durch die Antriebswelle 7 und die Stelleinrichtung 27 wird der zuvor genannte Betätigungsmechanismus für die axiale Verstellung des Anschlusskolbens 15 gebildet. In Figur 2 ist auch erkennbar, dass zwischen der Abschlussbuchse 16 des Abschlusskolbens 15 und dem inneren Führungselement 5 des Gehäuses 1 an der zur Auslassöffnung 10 gewandten Öffnung 12 des Führungsteils 5 ein Sammelraum 28 zur Aufnahme von Ablagerungen vorgesehen ist. Dort können Ablagerungen von Kalk, Eisen und Mangan gesammelt werden. Der Abschlusskolben 15 weist zwischen seiner Abschlussbuchse 16 und dem inneren Führungsteil 5 des Gehäuse 1 genügend Spiel auf, um das Gehäuse 1an seiner Innenseite beschichten zu können.

Die zwischen der Antriebswelle 7 und dem Führungselement 17 zur Umwandlung einer Drehung der Antriebswelle 7 in eine Axialbewegung des Abschlusskolbens 15 angeordnete Stelleinrichtung 27 enthält ein mit der Antriebswelle 7 verdrehgesichert verbundenes kurbelförmiges Stellelement 29, welches über eine Nut-Zapfen-Verbindung mit dem hülsenförmigen Führungselement 17 des Abschlusskolbens 15 verbunden ist.

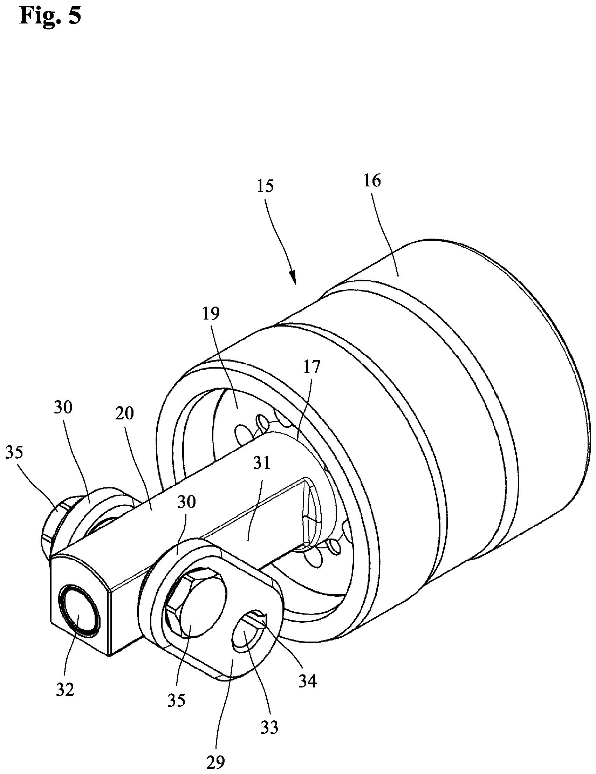

Wie aus Figur 1 hervorgeht, weist das mit der Antriebswelle 7 über ein Mehrkantprofil oder eine Passfedernut verdrehgesichert verbundene Stellelement 29 einen U-förmigen Querschnitt mit zwei Seitenwangen 30 auf. Zwischen den beiden Seitenwangen 30 des Stellelements 29 ist der schlankere Führungsbereich 20 des hülsenförmigen Führungselements 17 angeordnet. Hierzu weist der schlankere Führungsbereich 20 des hülsenförmigen Führungselements 17 gemäß Figur 5 zwei gegenüberliegende Abflachungen 31 auf. In Figur 5 ist außerdem erkennbar, dass das hülsenförmige Führungselement 17 eine durchgängige Führungsbohrung 32 zur Führung des Führungselements 17 auf der zentralen Führungsachse 13 enthält. In dem Stellelement 29 ist bei der gezeigten Ausführung eine zur Führungsbohrung 32 rechtwinklige Aufnahmebohrung 33 mit einer Paßfedernut 34 zur verdrehfesten Verbindung des Stellelements 29 mit der Antriebswelle 7 vorgesehen.

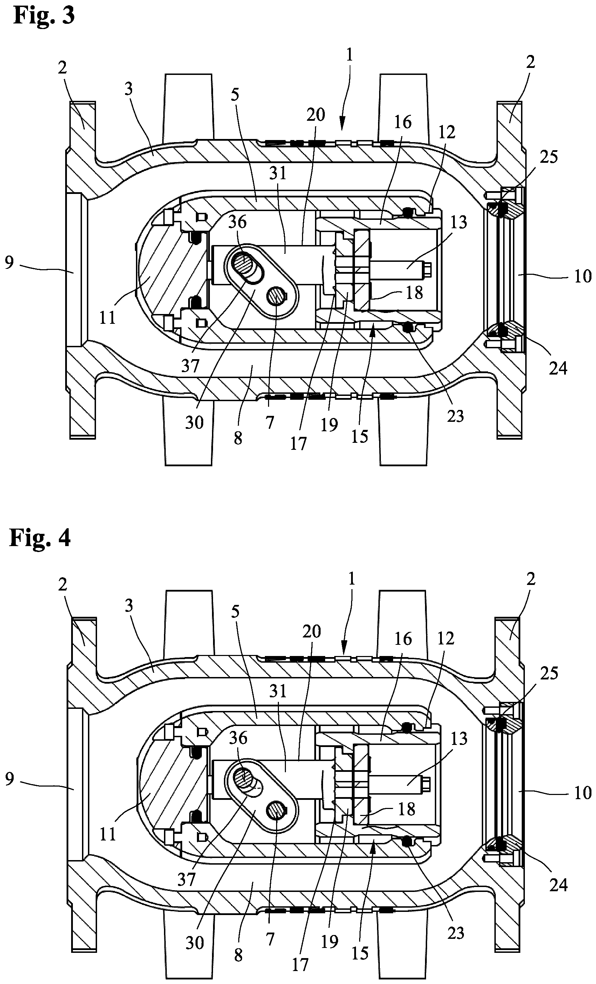

Die Verbindung des Stellelements 29 mit dem hülsenförmigen Führungselements 17 erfolgt bei der in den Figuren 1 bis 3 gezeigten Ausführung über die hier als Schaft zweier Schrauben 35 ausgeführten Verbindungszapfen 36, die gemäß Figur 3 in entsprechende Bohrungen an den gegenüberliegenden Abflachungen 31 am schlankeren Führungsbereich 20 des Führungselements 17 eingeschraubt und in Langlöchern 37 der beiden Seitenwangen 30 des Stellelements 29 geführt sind.

Bei der gezeigten Ausführung kann die Antriebswelle 7 über ein Getriebe mit Hilfe eines Handrads manuell gedreht werden. Die Drehung der Antriebswelle 7 zur Verstellung des Abschlusskolbens 15 kann aber auch elektrisch, pneumatisch oder hydraulisch erfolgen.

In Figur 4 ist ein weiteres Ausführungsbeispiel für ein erfindungsgemäßes Ringkolbenventil gezeigt. Diese Ausführung unterscheidet sich von dem in den Figuren 1 bis 3 gezeigten Ausführungsbeispiel lediglich dadurch, dass das Langloch 37 einen gebogenen Verlauf aufwiest. Durch die entsprechende Auswahl der Form des Langloches kann die Steuercharakteristik verändert werden. Ansonsten entspricht diese Ausführung der in den Figuren 1 bis 3 gezeigten Ausführungsform, so dass einander entsprechende Bauteile auch mit denselben Bezugszeichen versehen sind.

### Bezugszeichenliste

- 1: Gehäuse
- 2: Anschlussflansch
- 3: Außenteil
- 4: Halterippen
- 5: Innerer Führungsteil
- 6: Antriebsflansch
- 7: Antriebswelle
- 8: Ringkanal
- 9: Einlassöffnung
- 10: Auslassöffnung
- 11: Verschlussteil
- 12: Öffnung
- 13: Führungsachse
- 14: Gewinde
- 15: Abschlusskolben
- 16: Abschlussbuchse
- 17: Führungselement
- 18: Halteteil
- 19: Haltebereich
- 20: Führungsbereich
- 21: Lager
- 22: Lager
- 23: Dichtung
- 24: Haltering
- 25: Abschlussdichtung
- 26: Lagerbuchse
- 27: Stelleinrichtung
- 28: Sammelraum
- 29: Stellelement
- 30: Seitenwange
- 31: Abflachung
- 32: Führungsbohrung
- 33: Aufnahmebohrung
- 34: Passfedernut
- 35: Schraube
- 36: Verbindungszapfen
- 37: Langloch

## Patentansprüche

1. Ringkolbenventil mit einem Gehäuse (1), einem zwischen einem Außenteil (3) und einem inneren Führungsteil (5) des Gehäuses (1) gebildeten Ringkanal (8) zur Führung eines Mediums zwischen einer Einlassöffnung (9) und einer Auslassöffnung (10) des Gehäuses (1), einem innerhalb des inneren Führungsteils (5) des Gehäuses (1) axial verschiebbar geführten Abschlusskolben (15) und eine mittels einer Antriebswelle (7) von der Außenseite des Gehäuses (1) betätigbare Stelleinrichtung (27), über die der Abschlusskolben (15) durch Drehung der Antriebswelle (7) zwischen einer Öffnungsstellung und einer Schließstellung axial bewegbar ist, **dadurch gekennzeichnet, dass** der Abschlusskolben (15) über ein hülsenförmiges Führungselement (17) auf einer zentralen Führungsachse (13) verschiebbar geführt ist und die Stelleinrichtung (27) ein mit der Antriebswelle (7) verdrehgesichert verbundenes Stellelement (29) enthält, das über eine Nut-Zapfen-Verbindung (36, 37) mit dem hülsenförmigen Führungselement (17) verbunden ist.

2. Ringkolbenventil nach Anspruch 1, **dadurch gekennzeichnet, dass** die Nut-Zapfen-Verbindung (36, 37) durch mindestens eine Längsnut oder ein Langloch (37) in dem Stellelement (29) und einen in die Längsnut oder das Langloch (37) eingreifenden Verbindungszapfen (36) an dem hülsenförmigen Führungselement (17) gebildet wird.

3. Ringkolbenventil nach Anspruch 1 oder 2, **dadurch gekennzeichnet, dass** das Stellelement (29) einen U-förmigen Querschnitt mit zwei Seitenwangen (30) enthält, zwischen denen ein mit seitlichen Abflachungen (31) versehener Führungsbereich (20) des hülsenförmigen Führungselements (17) angeordnet ist.

4. Ringkolbenventil nach Anspruch 3, **dadurch gekennzeichnet, dass** in den beiden Seitenwangen (39) des Stellelements (30) jeweils eine Längsnut oder ein Langloch (37) zur Aufnahme jeweils eines Verbindungszapfens (36) an gegenüberliegenden Seiten des hülsenförmigen Führungselements (17) vorgesehen sind.

5. Ringkolbenventil nach Anspruch 4, **dadurch gekennzeichnet, dass** die Verbindungszapfen (36) als Schaft zweier Schrauben (35) gebildet sind, die in entsprechende Bohrungen an den gegenüberliegenden Abflachungen (31) am Führungsbereich (20) des Führungselements (17) eingeschraubt sind.

6. Ringkolbenventil nach einem der Ansprüche 2 bis 5, **dadurch gekennzeichnet, dass** die Längsnut oder das Langloch (37) einen geraden oder gebogenen Verlauf aufweist.

7. Ringkolbenventil nach einem der Ansprüche 1 bis 6, **dadurch gekennzeichnet, dass** die Mittelachse der Antriebswelle (7) gegenüber der Mittelachse der zentralen Führungsachse (13) versetzt ist.

8. Ringkolbenventil nach einem der Ansprüche 1 bis 7, **dadurch gekennzeichnet, dass** die zentrale Führungsachse (13) an einem deckelförmigen Verschlussteil (11) des inneren Führungsteils (5) des Gehäuses (1) angeordnet ist.

9. Ringkolbenventil nach einem der Ansprüche 1 bis 8, **dadurch gekennzeichnet, dass** das hülsenförmige Führungselement (17) über ein vorderes und hinteres Lager (21, 22) auf der zentralen Führungsachse (13) verschiebbar geführt ist.

10. Ringkolbenventil nach einem der Ansprüche 1 bis 9, **dadurch gekennzeichnet, dass** zwischen einer Abschlussbuchse (16) des Abschlusskolbens (15) und dem inneren Führungsteil (5) des Gehäuses (1) einer zur Auslassöffnung (10) gewandten Öffnung (12) des Führungsteils (5) ein Sammelraum (28) zur Aufnahme von Ablagerungen angeordnet ist.
